# EUROPEAN PATENT SPECIFICATION

(11) **EP 0 570 656 B1**
(45) Date of publication and mention of the grant of the patent: **15.01.1997**
(21) Application number: 92830531.7
(22) Date of filing: 29.09.1992
(51) Int. Cl.: B01D 50/00, F24C 15/20

(54) **Filtering assembly for filtering the air coming from hoods mounted in kitchens or conveyed to air processing systems**
Filtrationsanlage für Luftbehandlungsysteme oder Küchenhauben
Installation de filtration pour des systèmes de traitement de l'air ou pour des hottes de cuisine

(30) Priority: 18.05.1992 IT MI921186
(43) Date of publication of application: 24.11.1993
(73) Proprietor: DEPARIA S.r.L., IT-22053 Lecco (Como) (IT)
(72) Inventor: Caspani, Angelo, I-22053 Lecco (Como) (IT); Vergani, Cristiano, I-22053 Lecco (Como) (IT)
(74) Representative: Cicogna, Franco

(56) References cited:
- EP-A- 0 314 085
- CA-A- 1 091 144
- FR-A- 2 663 861
- US-A- 3 837 269

## Description

The present invention relates to a filtering assembly for filtering the air coming from hoods mounted in large kitchens or conveyed to air processing systems.

As known, prior filtering systems for domestic, restaurant and the like uses comprise activated carbons, which must be frequently recovered to their starting characteristics, which is very expensive.

It is also known that the mentioned activated carbon filters, upon disassembling, must be processed with water steam, possibly added with solvents, and then heated in order to be suitably cleaned.

The used solvents, as it should be apparent, must be recovered.

The aim of the present invention is to provide such a filtering assembly which can be easily used and serviced.

Within the scope of the above mentioned aim, a main object of the present invention is to provide such a filtering assembly which can be quickly recovered and regenerated, in its assembled condition, by merely using a multi-way valve.

Another object of the present invention is to provide such a filtering assembly which is very simple construction-wise, can be easily serviced, and moreover is very reliable in operation. Accordingly the invention contemplates a filtering assembly as claimed.

According to one aspect of the present invention, the improved filtering assembly comprises an electric-filtering section, including outer plates conneced to ground, therebetween there are interposed wire plates, perpendicular to the air flow to be processed, and held under a high voltage.

The air entrained fat particles and steam are positively charged in this region, so that they are ionized.

Then, in a further stage (the hydrofiltering section) the above mentioned particles are caused to drop by water sprays which are sprayed as a water rain, possibly additivated with chlorine or potassium permanganate or other reactive substances.

The water-reactive substance mixture is collected on the bottom, where it is caused to circulate by a pump, after its filtering out by means of a mechanical type of filtering unit.

The above disclosed water circulating circuit, can be switched by means of a switching valve, in order to send washing water on the inlet mechanical filtering unit and on the plates of the first electrostatic filtering stage.

In this case, actually, the washing water, driven by the same pump through ducts and nozzles, will impinge as a water rain on the inlet mechanical filter, the diffusing filter and the electrodes of the first stage of the electrostatic filter (the electrofiltering section), so as to remove the fat particles collected thereon.

The filtering assembly, as stated, further comprises two additional mechanical filtering stages, one arranged at the inlet and the other arranged at the outlet of the system.

The stage arranged at the inlet of the system, to which there is conveyed the air to be processed, comprises a mechanical labyrinth, including perforated sheet metal elements or stretched nets, having offset holes, and operates so as to restrain thereon the fat particles and steam.

Another perforated sheet metal element is provided for adjusting the flow, so as to distribute the latter through the overall section of the filtering assembly.

The inertial mechanical filtering stage, arranged at the outlet of the system, comprises a drop separating unit, adapted to provide an inertially operating labyrinth system, restraining the residue drops of the washing water.

The filtering assembly is so designed that the air to be processed is caused at first to descend and then to raise.

In particular, this air, during its descending movement, passes through the nozzle pipes including nozzles for cleaning the pre-filtering unit, further pipes including washing nozzles for cleaning the diffuser filter, the electrical filtering section and hydrofiltering section.

Then, this air is displaced upwardly through a stack and finally passes through the outlet inertial mechanical filter.

In particular, the filtering assembly has been so designed as to allow an easy access to the filtering units, and this by means of removable panels of broad surface and inspection windows allowing to see the washing water.

### BRIEF DESCRIPTION OF THE DRAWINGS

Further characteristics and advantages of the invention will become more apparent hereinafter from the following detailed disclosure of a preferred, though not exclusive, embodiment of a filtering assembly specifically designed for filtering air coming from hoods installed in large kitchens, which is illustrated, by way of an indicative, but not limitative example, in the figures of the accompanying drawings, where:

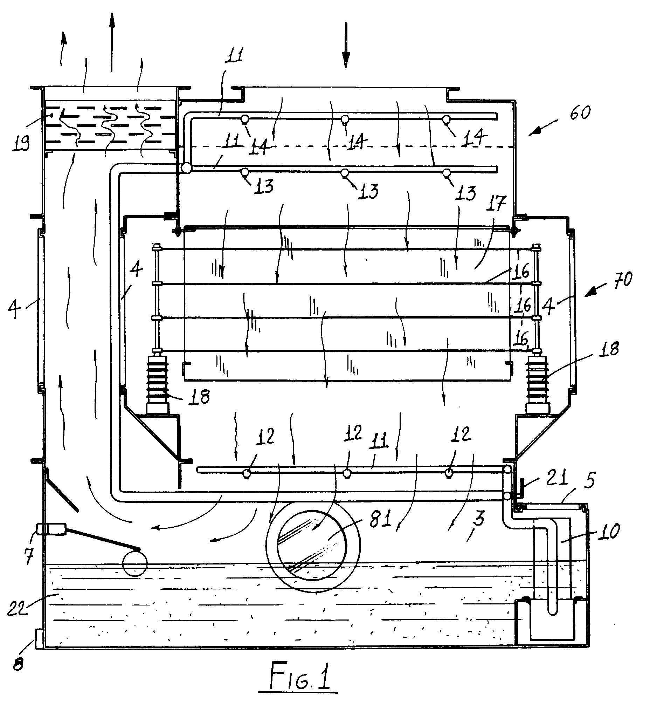

Figure 1 is a partial phantom view illustrating the overall filtering assembly according to the present invention;
   and

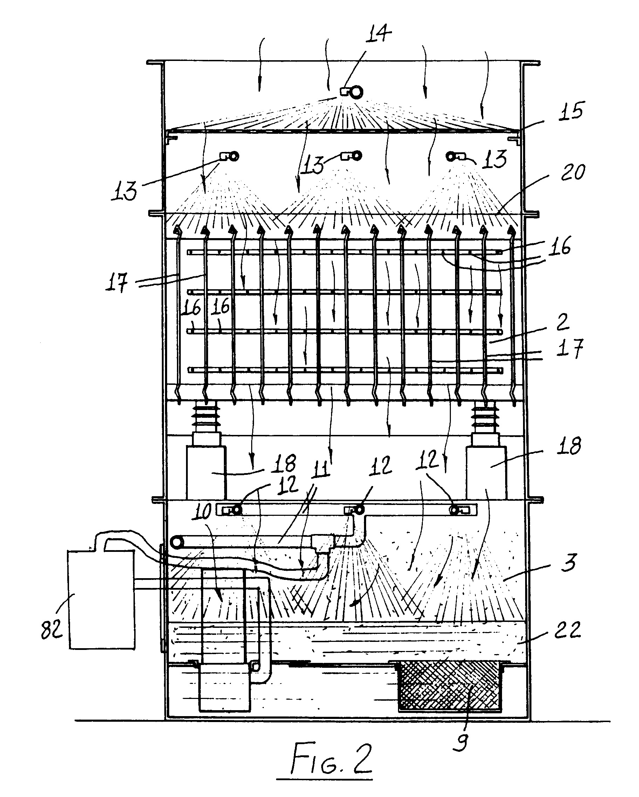

Figure 2 is a cross sectional view illustrating the subject filtering assembly.

### DESCRIPTION OF THE PREFERRED EMBODIMENT

With reference to the figures of the accompanying drawings, the filtering assembly, specifically designed for filtering air coming from hoods installed in large kitches, according to the present invention, comprises a filtering body including, in a cascade relationship, a plurality of filtering units.

The latter, in particular, comprise a prefiltering unit 15, for removing fat and condensate drops, a diffusing filtering unit 20, an electrical filtering unit or section 2 for ionizing the fat and steam molecules, a hydrofiltering unit or section 3 providing a water rain, with possible reactive substances, in order to entrain the fat and steam particles and, finally, an outlet inertial mechanical filter 19 for separating or restraining the water particles.

The pre-filtering unit 15 comprises a mechanical type of labyrinth, made of perforated metal sheet elements, stretched nets including offset holes or constructed by other equivament methods, in order to restrain the fat or steam particles supplied to said pre-filtering unit 15.

The diffusing filtering unit 20 comprises a perforated sheet metal element and is designed for diffusing the air to be processed through the overal cross-section of the filtering assembly.

The electrical-filtering section 2, or ionizing barrier, comprises plates 17, which are connected to the ground, and therebetween there are arranged tungsten wires 16, which are perpendicular to the air flow, and to which there is applied a high positive voltage.

The plates of the high voltage circuit of the electrical-filtering unit are power supplied by a power supply unit.

In particular, said tungsten wires 16 are connected to equipotential metal bars, supported by insulating elements 18.

The particle to be filtered in this region are ionized and removed in the subsequent stage, that is in the hydrofiltering section or unit 3.

The hydrofiltering section 3, in particular, comprises a region including a plurality of nozzles 12 for providing a water rain, which can possibly include also reactive substances, for picking up and entraining the already ionized fat particles.

In this step, the air speed is of about 2 m/s.

The outlet inertial mechanical filter 19 comprises offset grids, so arranged as to provide a labyrinth system, which operates in an intertial manner, so as to restrain the water drops.

This filtering assembly is further provided with a washing section for washing the prefiltering unit 15, the diffuser filter 20 and the electrical filter section 2 plates, as well as plates 17 and wires 16 to be used for the maintenance of the filtering assembly.

This washing section comprises pipes 11 for conveying the water-reactive substance mixture and for spraying this mixture through the washing nozzles 14 for washing the prefiltering unit, and the washing nozzles 13 for washing the filter on the above mentioned parts, in order to hold free the passages and prevent short-circuits because of the presence of residues between the plates.

The washing water, added with possible reactive substances, is collected in a collecting basin 22, arranged under the filtering assembly, from which it is sucked by a pump 10, through a sediment filter 9 for the residues, and sent through the two-way valve 21 to the hydrofiltering section 3 or to the washing circuit, for the daily service.

The sediment filter 9 separates from the water possible solid materials present herein.

The water is then recirculated, whereas the fat particles are processed by chlorine or are oxidized.

The water level in the water collecting basin 22, is adjusted by means of a float valve 7.

The water, on the other hand, is drained through the outlet fitting 8.

Moreover, it is possible to visually control the water level through an inspection window 81.

The air passage section to the filtering assembly is enlarged near the electric-filtering unit 2, so as to reduce the air speed in order to optimize its ionization.

At the enlargement of the electrical filtering unit 2, the inlet duct to the inertial mechanical filter 19 is narrowed in order to accelerate the processed air.

The filtering assembly has been designed so as to greatly facilitate its maintenance.

In particular, the inner components of the filtering assembly can be easily disassembled.

The ground plates are firmly connected and restrained, and moreover, the outer panels can be easily removed, and two inspection doors 4 are provided for the electrical filtering unit, and a further door 5 is provided for the collecting basin 22, near the pump 10 and the sediment filter 9.

In this connection it should be pointed out that the filtering assembly has been designed so as to comprise three discrete modules, suitably made in order to be separated from one another, but which can be easily associated in order to provide the above disclosed overall construction features.

The above mentioned three modules respectively comprise a first module 60, which comprises the inertial mechanical filter 19, the pipes 11 for conveying the wahing water, provided with the nozzles 13 and 14 and a perforated sheet metal element 15 which operates as a prefilter.

The second module 70 comprises the diffuser filter 20 and the electrical filtering section or unit, in which there are housed the plates 17 and wires 16, as well as their supporting elements which rest on the insulators 18.

The third module 80 comprises the hydrofilter section, which includes the ducts 11, nozzles 12, and the two-way valve 21, the pump 10 and collecting basin 22. The latter is provided with a float supply valve 7 and with inspection windows 81, as well as an outlet fitting 8 arranged at the bottom of the collecting basin 22 and sediment filter 9.

In this connection it should be further pointed out that the filtering assembly according to the present invention can also operate by reversing the air flow direction.

The filtering assembly, moreover, further comprises yet another filter unit 82, provided for separating the water-reactive mixture from oils and other fat or powder particles collecteed in the basin 22.

The inlet of the water-reactive mixture used in the basin and the draining of the latter can be automatized by using solenoid valves and analyzing sensors.

From the above disclosure it should be apparent that the invention fully achieves the intended aim and objects.

In practicing the invention, the used materials, provided that they are compatible to the intended use, as well as the contingent size and shape can be any according to requirements.

## Claims

1. A filtering assembly for filtering gas, particularly designed for filtering air coming from hoods installed in large kitchens, or conveyed through air processing systems comprising a housing with a gas inlet and a gas outlet, the whole flow of gas passing in use successively:
- downwardly through the following means:
- a washing section including pipes (11) having a plurality of nozzles (14) for spraying downwardly a washing liquid,
- a pre-filtering unit (15) comprising a mechanical type of labyrinth made of sheet metal elements and/or stretched nets including a plurality of offset holes,
- a diffuser filter (20) comprising a perforated sheet metal element and being designed for diffusing the gas to be processed through the overall cross-section of said filtering assembly,
- an electrical-filter section (2) comprising ground plates (17) and therebetween tungsten wire assemblies (16) perpendicular to the gas flow and connected to metal bars which are supported by insulating elements (18 ) with means being provided to apply to said wire assemblies a positive voltage,
- a water hydrofilter section (3) comprising a plurality of spraying nozzles (12) for spraying a water rain possibly including reactive substances,
- then over a basin (22) for collecting the washing liquid and the water from the hydrofilter section (3),
- and then upwardly in a conduit to the gas outlet which is obstucted by an inertial mechanical filter (19) for restraining residue drops of the liquid impinging thereon.

2. A filtering assembly according to Claim 1, characterized in that said inertial mechanical filter (19) comprises a plurality of grids which are offset so as to provide a labyrinth system operating in an inertial way.

3. A filtering assembly according to Claim 1 or 2, characterized in that said assembly further comprises a pump (10) for removing from said basin (22) the liquid contained therein and sending it, through a sediment filter (9) and a two way valve (21), either to ducts (11') with nozzles (12) of said hydrofilter section (3) or to the washing circuit.

4. A filtering assembly according to any of Claims 1 to 3, characterized in that the water level in the collecting basin (22) is adjusted by a float valve (7), there being moreover provided a draining fitting (8) and an inspection window (81) for visually controlling the water level.

5. A filtering assembly according to any of Claims 1 to 4, characterized in that near said electrical filter section (2) there is provided an enlargement of the cross-section of the gas passage to the filtering assembly, adapted to reduce the air speed in order to optimize the ionization thereof.

6. A filtering assembly according to Claim 5, characterized in that at said enlargement the conduit leading to the inertial mechanical filter (19) is narrowed in order to accelerate the processed gas.

7. A filtering assembly according to Claim 3, characterized in that said filtering assembly is made of the assembly of three discrete separate modules:
- a first module (60) comprising the washing section with additional nozzles (13) for washing said ground plates (17), the pre-filtering unit (15) and the inertial mechanical filter (19),
- a second module (70) comprising the diffuser filter (20) and the electrical-filter section (2),
- a third module (80) comprising ducts (11') with nozzles (12), the two-way valve (21), the basin (22) with a level control float valve (7) and an outlet fitting (8) at the bottom of the basin (22) and the sediment filter (9).

8. A filtering assembly according to any of Claims 1 to 7, characterized in that said filtering assembly further comprises a further filter unit (82) operating to separate the liquid from particles collected in said basin (22).

## Patentansprüche

1. Eine Filtriervorrichtung zur Filtrierung von Gasen, speziell für die Filtrierung von Luft entworfen, die von Abzugshauben aus Großküchen herrührt oder durch Systeme zur Luftbehandlung befördert wurde, umfassend ein Gehäuse mit einem Gaseinlaß und einem Gasauslaß, wobei im Betrieb der gesamte Gasfluß hintereinander passiert:
- In absteigender Richtung folgende Vorrichtungen:
- Einen Waschabschnitt, der Leitungen (11) mit einer Vielzahl von Düsen (14) einschließt, um eine Waschflüssigkeit von oben nach unten zu versprühen,
- eine Vorfilterungseinheit (15), die ein mechanisches Labyrinth umfaßt, das aus Blechteilen und/oder gestreckten Netzen mit einer Vielzahl von untereinander versetzten Öffnungen besteht,
- einen Verteilfilter (20), der ein mit Löchern versehenes Metallteil umfaßt und dazu entworfen ist, das zu behandelnde Gas auf die gesamte Querschnittsfläche dieser Filtriervorrichtung zu verteilen,
- einen Abschnitt (2) mit einem elektrischen Filter, der Erdplatten (17) und dazwischen Vorrichtungen (16) aus Wolframdraht umfaßt, die senkrecht zum Gasstrom stehen und mit Metallstangen verbunden sind, die von isolierenden Teilen (18) getragen werden, wobei eine Vorrichtung bereitgestellt ist, um an diese Drahtvorrichtungen eine positive Spannung anzulegen,
- einen Abschnitt (3) mit einem Wasserfilter für das Wasser, der eine Vielzahl von Sprühdüsen (12) zum Versprühen eines Wasserregens umfaßt, der möglichst reaktive Substanzen enthält;
- und der Gasfluß dann über ein Becken (22) geleitet wird, um die Waschflüssigkeit und das Wasser vom Abschnitt (3) des Wasserfilters zu sammeln,
- und dann in aufsteigender Richtung durch eine Leitung zum Gasauslaß, der mit einem mechanischen Trägheitsfilter (19) verschlossen ist, um restliche Flüssigkeitstropfen zurückzuhalten, die darauf auftreffen.

2. Eine Filtriervorrichtung nach Anspruch 1, dadurch gekennzeichnet, daß dieser mechanische Trägheitsfilter (19) eine Vielzahl von Gittern umfaßt, die zueinander versetzt sind, um ein Labyrinthsystem bereitzustellen, dessen Funktionsweise auf Trägheit beruht.

3. Eine Filtriervorrichtung nach Anspruch 1 oder 2, dadurch gekennzeichnet, daß diese Vorrichtung weiterhin eine Pumpe (10) umfaßt, um von diesem Becken (22) die darin enthaltene Flüssigkeit zu entfernen und sie über einen Sedimentationsfilter (9) und ein Durchgangsventil (21) entweder zu den Leitungen (11') mit den Düsen (12) dieses Abschnitts (3) des Wasserfilters oder zum Waschkreislauf zu leiten.

4. Eine Filtriervorrichtung nach irgendeinem der Ansprüche 1 bis 3, dadurch gekennzeichnet, daß der Wasserstand im Sammelbecken (22) durch ein Schwimmerventil (7) eingestellt wird, wobei dort weiterhin ein Drainageanschluß (8) und ein Sichtfenster (81) für die Sichtkontrolle des Wasserstandes angebracht sind.

5. Eine Filtriervorrichtung nach irgendeinem der Ansprüche 1 bis 4, dadurch gekennzeichnet, daß nahe dieses Abschnittes (2) mit dem elektrischen Filter eine Verbreiterung des Querschnitts des Gasdurchlasses zur Filtriervorrichtung bereitgestellt ist, die angepaßt ist, die Geschwindigkeit der Luft zu verringern, um deren Ionisierung zu fördern.

6. Eine Filtriervorrichtung nach Anspruch 5, dadurch gekennzeichnet, daß sich bei dieser Verbreiterung die Leitung, die zum mechanischen Trägheitsfilter (19) führt, verengt, damit das behandelte Gas beschleunigt wird.

7. Eine Filtriervorrichtung nach Anspruch 3, dadurch gekennzeichnet, daß diese Filtriervorrichtung aus dem Zusammenbau dreier unterschiedlicher Module entsteht:
- Eines ersten Moduls (50), das den Waschabschnitt mit zusätzlichen Düsen (13) zum Waschen dieser Erdplatten (17), die Vorfilterungseinheit (15) und den mechanischen Trägheitsfilter (19) umfaßt,
- eines zweiten Moduls (70), das den Verteilfilter (20) und den Abschnitt (2) mit den elektrischen Filter umfaßt,
- eines dritten Moduls (80), das die Leitungen (11') mit Düsen (12), das Durchgangsventil (21), das Becken (22) mit einem Schwimmerventil (7) zur Steuerung des Wasserstandes und einem Drainageanschluß (8) am Boden des Beckens (22) und den Sedimentationsfilter (9) umfaßt.

8. Eine Filtriervorrichtung nach irgendeinem der Ansprüche 1 bis 7, dadurch gekennzeichnet, daß diese Filtriervorrichtung weiterhin eine zusätzliche Filtriereinheit (82) umfaßt, die die Trennung der Flüssigkeit von den in diesem Becken (22) gesammelten Partikeln bewirkt.

## Revendications

1. Dispositif de filtrage pour le filtrage des gaz, spécialement conçu pour filtrer l'air provenant des hottes installées dans de grandes cuisines ou convoyé à travers des systèmes pour le traitement de l'air, comprenant un carter avec une entrée et une sortie du gaz, tout l'écoulement du gaz parcourant successivement:
- en direction descendante les dispositifs suivants:
- une section de lavage incluant des conduits (11) ayant une multiplicité de buses (14) destinées à pulvériser un liquide de lavage du haut vers le bas,
- une unité de préfiltrage (15) comprenant un type mécanique de labyrinthe fait d'éléments en tôle métallique et/ou de filets étirés incluant une multiplicité de trous décalés les uns par rapport aux autres,
- un filtre diffuseur (20) comprenant un élément en tôle métallique perforée et destiné à répandre le gaz à traiter sur toute la section transversale dudit dispositif de filtrage,
- une section (2) avec une filtre électrique comprenant deux plaques (17) de terre et, entre celles-ci, des dispositifs (16) en fil de tungstène perpendiculaires à l'écoulement du gaz et connectés à des barres métalliques supportées par des éléments isolateurs (18), un dispositif étant mis en oeuvre pour fournir auxdits dispositifs en fil de tungstène un courant à tension positive,
- une section avec un filtre d'eau (3) pour l'eau, comprenant une multiplicité de buses de pulvérisation (12) pour pulvériser une pluie d'eau qui, le cas échéant, contient des substances réactives,
- et traversant ensuite un bassin (22) pour le ramassage du liquide de lavage et de l'eau provenants de la section (3) avec le filtre d'eau,
- puis, en direction ascendante, un conduit vers la sortie du gaz fermée par un filtre mécanique à inertie (19) pour l'élimination des gouttes résiduelles du liquide qui le frappent.

2. Un dispositif de filtrage selon la revendication 1, caractérisé en ce que ledit filtre mécanique à inertie (19) comprend une multiplicité de grilles décalées entre elles de sorte à donner un système à labyrinthe opérant par inertie.

3. Un dispositif de filtrage selon la revendication 1 ou 2, caractérisé en ce que ledit dispositif comprend en outre une pompe (10) pour éliminer dudit bassin (22) le liquide y contenu et pour le convoyer, à travers un filtre à sédimentation (9) et une soupape de traversée (21), ou bien à des conduits (11') avec des buses (12) de ladite section (3) avec le filtre d'eau, ou bien au circuit de lavage.

4. Un dispositif de filtrage selon l'une quelconque des revendications de 1 à 3, caractérisé en ce que le niveau de l'eau dans le bassin de ramassage (22) est réglé par une soupape à flotteur (7), y étant en outre mis en oeuvre un raccord (8) pour le drainage et un hublot de visite (81) pour le contrôle visuel du niveau de l'eau.

5. Un dispositif de filtrage selon l'une quelconque des revendications de 1 à 4, caractérisé en ce qu'au voisinage de ladite section (2) avec le filtre électrique est mis en oeuvre un élargissement de la coupe transversale du passage du gaz vers le dispositif de filtrage, apte à réduire la vitesse de l'écoulement d'air pour optimiser son ionisation.

6. Un dispositif de filtrage selon la revendication 5, caractérisé en ce que le conduit qui se dirige vers le filtre mécanique à inertie (19) se rétrécit en proximité dudit élargissement, de sorte à accélérer l'écoulement du gaz traité.

7. Un dispositif de filtrage selon la revendication 3, caractérisé en ce que ledit dispositif de filtrage est formé par l'assemblage de trois modules distincts:
- d'un premier module (50) comprenant la section de lavage avec des buses supplémentaires (13) pour le lavage desdites plaques de mise à la terre (17), l'unité de préfiltrage (15) et le filtre mécanique à inertie (19),
- d'un second module (70) comprenant le filtre diffuseur (20) et la section (2) avec le filtre électrique,
- d'un troisième module (80) comprenant des conduits (11') avec des buses (12), la soupape de traversée (21), le bassin (22) avec une soupape à flotteur (7) pour le réglage du niveau et un raccord de sortie (8) au fond du bassin (22), et le filtre à sédimentation (9).

8. Un dispositif de filtrage selon l'une quelconque des revendications de 1 à 7, caractérisé en ce que ledit dispositif de filtrage comprend en outre une unité supplémentaire de filtrage (82) effectuant la séparation du liquide des particules ramassées dans ledit bassin (22).
